# EUROPEAN PATENT SPECIFICATION

(11) **EP 3 090 148 B1**
(45) Date of publication and mention of the grant of the patent: **19.05.2021**
(21) Application number: 14871441.3
(22) Date of filing: 14.08.2014
(51) Int. Cl.: F01D 25/24, F02C 7/00

(54) **GAS TURBINE ENGINE HAVING ENERGY DISSIPATING GAP AND CONTAINMENT LAYER**
GASTURBINENMOTOR MIT ENERGIEABLEITUNGSSPALT UND EINDÄMMUNGSSCHICHT
MOTEUR À TURBINE À GAZ AYANT UN ESPACE DE DISSIPATION D'ÉNERGIE ET UNE COUCHE DE CONFINEMENT

(30) Priority: 19.12.2013 US 201361918218 P
(43) Date of publication of application: 09.11.2016
(73) Proprietor: Raytheon Technologies Corporation, Farmington, CT 06032 (US)
(72) Inventor: GARCIA, Igor, S., East Hartford, CT 06108 (US); LIU, Shu, South Glastonbury, CT 06073 (US); MAYER, Robert, Russell, Manchester, CT 06040 (US); BAKER, Eric, East Hartford, CT 06066 (US); ERNST, Stephanie, Fruitport, MI 49415-8682 (US); GRANT, Fernando, K., South Windsor, CT 06074 (US); MILLER, Andrew, S., Marlborough, CT 06447 (US); BALAWAJDER, Peter, Vernon, CT 06066 (US); PALMER, Paul, W., S. Glastonbury, CT 06073 (US); PIMENTA, David C., Rocky Hill CT 06067 (US); LEVASSEUR, Glenn, Colchester CT 06415 (US)
(74) Representative: Dehns
(86) International application number: PCT/US2014/051119
(87) International publication number: WO 2015/094421

(56) References cited:
- US-A- 4 547 122
- US-A- 6 059 523
- US-A1- 2004 141 837
- US-A1- 2007 280 817
- US-A1- 2011 052 383
- US-A1- 2011 154 801
- US-A1- 2011 286 839
- US-A1- 2013 216 367
- US-B1- 6 305 899

## Description

### Technical Field

This disclosure generally relates to gas turbine engines, and more particularly to core cases for gas turbine engines.

### Background

Gas turbine engines may generally include a fan section coupled to a core assembly. The core assembly may include a compressor section having one or more compressors, a combustion section, and a turbine section having one or more turbines. Each compressor includes multiple compressor blades while each turbine section includes multiple turbine blades. The compressor and turbine blades are disposed within a core case and are rotated rapidly during operation.

It is possible, although unlikely, for a compressor or turbine blade, or a fragment thereof, to separate during operation and strike the core case. Accordingly, core cases are often designed to contain blades and blade fragments, thereby to prevent any liberated material from radially exiting the engine. The demands of blade containment, however, are balanced by the demands for low weight and high strength. Adequate containment is often obtained by increasing the thickness of the core case sufficiently to resistant penetration by a blade or blade fragment. A thicker core case, however, adds weight to the core assembly, thereby reducing engine efficiency.
US 2004/141837A discloses a blade containment assembly comprising a viscoelastic material arranged to fill a space between a containment casing and a flexible structure. US 4547122 A discloses a method of containing blade fragments by encircling a gas turbine engine with a honeycomb structure and supporting ceramic blocks within cavities. US 6059523 A discloses containment rings separated by a layer of thin ductile material.

### Summary of the Disclosure

Viewed from one aspect the present invention provides a core assembly according to claim 1.

Further embodiments of the invention are set out in the dependent claims.

### Brief Description of the Drawings

FIG. 1 is a schematic side elevation view, in partial cross-section, of an exemplary gas turbine engine;
FIG. 2 is an enlarged side elevation view, in cross-section, of a portion of the exemplary gas turbine engine of FIG. 1;
FIGS. 3A and 3B are schematic side elevation views, in cross-section, of exemplary embodiments of containment layers in the form of alternative plating layers disposed in a gap between a containment plate and a core case of the gas turbine engine of FIGS. 1 and 2;
FIGS. 4A and 4B are schematic side elevation views, in cross-section, of an exemplary embodiment of a containment layers in the form of a shape memory alloy, in retracted and expanded states respectively, disposed in a gap between a containment plate and a core case of the case turbine engine of FIGS. 1 and 2;
FIG. 5 is a schematic side elevation view, in cross-section, of an exemplary embodiment of a containment layer in the form of a weave layer disposed in a gap between a containment plate and a core case of the case turbine engine of FIGS. 1 and 2;
FIG. 6 is an enlarged perspective view of the weave layer of FIG. 5.

### Detailed Description

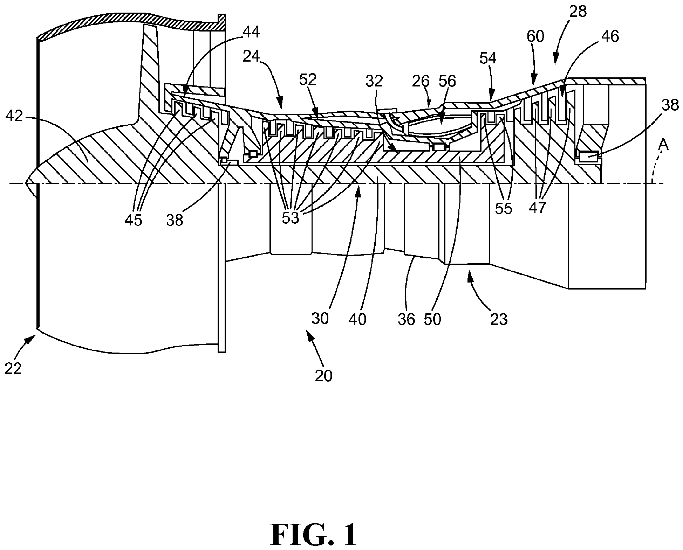

FIG. 1 schematically illustrates an exemplary gas turbine engine 20. The gas turbine engine 20 is disclosed herein as a two-spool turbofan that generally incorporates a fan section 22, and a core assembly 23. The core assembly 23 includes a compressor section 24, a combustor section 26, and a turbine section 28. Alternative engines might include an augmentor section (not shown) or a three-spool architecture among other systems or features. The fan section 22 drives air along a bypass flowpath while the compressor section 24 drives air along a core flowpath for compression, communication into the combustor section 26, and expansion through the turbine section 28. Although depicted as a turbofan gas turbine engine in the exemplary, non-limiting embodiment, it should be understood that the concepts described herein are not limited to use with turbofans as the teachings may be applied to other types of turbine engines.

The engine 20 generally includes a low spool 30 and a high spool 32 mounted for rotation about an engine longitudinal axis A relative to an engine static structure 36 via multiple bearing systems 38. It should be understood that various bearing systems 38 at various locations may alternatively or additionally be provided.

The low spool 30 generally includes an inner shaft 40 that interconnects a fan 42, a low pressure compressor 44, and a low pressure turbine 46. The low pressure compressor 44 includes a plurality of low pressure compressor blades 45, while the low pressure turbine 46 includes a plurality of low pressure turbine blades 47. The low pressure compressor and turbine blades 45, 47 are coupled to and rotate with the inner shaft 40. The inner shaft 40 is further connected to the fan 42 through a geared architecture (not shown) to drive the fan 42 at a lower speed than the low spool 30.

The high spool 32 includes an outer shaft 50 that interconnects a high pressure compressor 52 and high pressure turbine 54. The high pressure compressor 52 includes a plurality of high pressure compressor blades 53, while the high pressure turbine 54 includes a plurality of high pressure turbine blades 55. The high pressure compressor and turbine blades 53, 55 are coupled to and rotate with the outer shaft 50. A combustor 56 is disposed between the high pressure compressor 52 and the high pressure turbine 54. The inner shaft 40 and the outer shaft 50 are concentric and rotate about the engine longitudinal axis A which is collinear with their longitudinal axes.

The core assembly 23 defines a main fluid path, commonly referred to as the core flowpath (not shown), through the engine. Air traveling into the core flowpath is compressed by the low pressure compressor 44 then the high pressure compressor 52, mixed and burned with fuel in the combustor 56, then expanded over the high pressure turbine 54 and low pressure turbine 46. The turbines 46, 54 rotationally drive the respective low spool 30 and high spool 32 in response to the expansion. As used herein, the low pressure compressor 44 and the high pressure compressor 52 may collectively be referred to as "compressors." Similarly, the low pressure turbine 46 and the high pressure turbine 54 may collectively be referred to as "turbines."

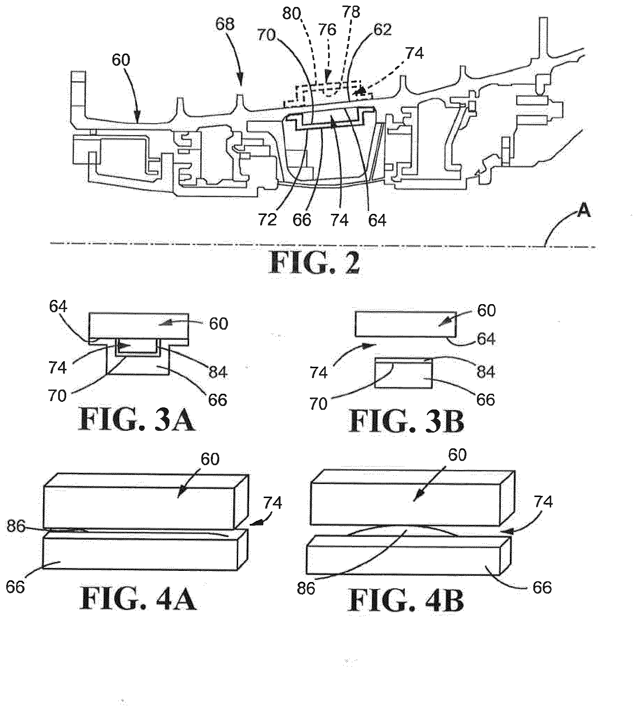

The core assembly 23 further includes a core case 60 that extends rearward from the fan section 22 along the engine axis A and generally surrounds the compressor section 24, the combustor section 26, and the turbine section 28. The core case 60 includes a core case outer surface 62 that may have a perimeter or circumference that is generally annular (FIG. 2). The core case 60 may further include a core case inner surface 64 (FIG. 2).

As best shown in FIG. 2, the exemplary core assembly 23 further includes a blade containment ring 66 positioned to retain compressor and/or turbine blades (or fragments thereof) that may become liberated from their respective shafts. FIG. 2 illustrates a high pressure turbine section 68 of the core assembly 23, where the core case 60 surrounds the high pressure turbine 54 (not shown in FIG. 2). Additional or alternative blade containment rings may be provided in other locations on the core assembly 23 to contain blade or blade fragments from the low pressure compressor 44, the high pressure compressor 52, and the low pressure turbine 46. While the containment ring 66 is described herein primarily in conjunction with its ability to contain liberated blades or blade fragments, it will be appreciated that the containment ring 66 may also serve other functions in the engine, such as a vane support or a seal support.

The blade containment ring 66 is disposed inside the core case 60 and includes a containment ring first surface 70 facing toward the core case inner surface 64 and a second containment ring surface 72 facing away from the core case 60 and toward the engine longitudinal axis A. The containment ring first surface 70 is spaced from the core case inner surface 64 to define a containment gap 74 therebetween. While the gap 74 is described herein primarily in conjunction with its ability to contain liberated blades or blade fragments, it will be appreciated that the gap 74 may also serve other functions in the engine, such as a passage for cooling air, control air, or instrumentation. The blade containment ring 66 may be directly coupled to the core case 60 as shown, or may be supported independent of the core case 60.

FIG. 2 also illustrates, in phantom, an alternative location for a blade containment ring 76 disposed outside the core case 60. The blade containment ring 76 includes a containment ring first surface 78 facing toward the core case outer surface 62 and a second containment ring surface 80 facing away from the core case 60. The containment ring first surface 78 is spaced from the core case outer surface 62 to define the containment gap 74 therebetween.

A containment layer is disposed in the containment gap 74 gap and configured to dissipate energy from radially projecting impacts, thereby to help contain blade and/or blade fragments that may be liberated from the turbines and/or compressors. In the embodiment illustrated at FIGS. 3A and 3B, the containment layer is shown as a plating layer 84 disposed on the containment ring first surface 70 of the containment ring 66. In FIG. 3A, the containment ring 66 is configured to directly attach to the core case 60, while in FIG. 3B the containment ring 66 is not directly coupled to the core case 60. In both embodiments, the plating layer 84 is formed directly on the containment ring first surface 70. The plating layer 84 may be formed of a malleable alloy or metal, such as copper. The plating layer 84 is formed on the containment ring first surface 70 by plating, placing the plating layer 84 in intimate contact with the containment ring first surface 70. Alternatively, the plating layer 84 may be formed on the core case inner surface 64 and disposed within the containment gap 74.

In an alternative embodiment illustrated at FIGS. 4A and 4B, the containment layer may be provided as a shape memory layer disposed within the containment gap 74. The shape memory layer may be a shape memory alloy structure 86 that is responsive to temperature. More specifically, at relatively low temperatures, the shape memory alloy structure 86 may assume a retracted state as shown in FIG. 4A. At relatively high temperatures, such as when the gas turbine engine is operating, the shape memory alloy structure 86 may expand to assume an expanded state as shown in FIG. 4B. In the expanded state, the shape memory alloy structure 86 may maintain the containment gap 74 between the core case 60 and the containment ring 66. Additionally, the shape memory alloy structure 86 may be configured to dissipate energy from radial impacts, thereby to improve containment of liberated blades or blade fragments. More specifically, during operation the rise in core temperature will deform the shape memory alloy layer to create the gap 74 between the core case 60 and the containment ring 66, which gap may advantageously improve energy dissipation when impacted by a foreign body.

The shape memory alloy structure 86 may be coupled to either the core case 60 or the containment ring 66, or both the core case 60 and containment ring 66. While the shape memory alloy structure 86 is shown having a convex shape in the expanded state, it will be appreciated that it may be configured to assume other shapes. Furthermore, multiple discrete shape memory alloy structures may be disposed between the core case 60 and the containment ring 66.

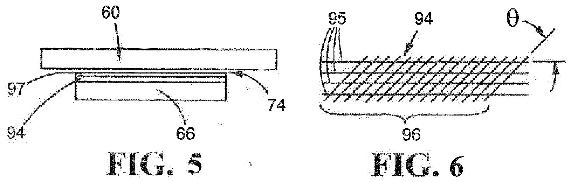

FIGS. 5 and 6 illustrate yet another alternative embodiment of a containment layer in the form of a weave layer 94. As shown in FIG. 5, the weave layer 94 is disposed in the containment gap 74 and may overlie a surface of the containment ring 66 as shown or the core case 60. As best shown in FIG. 6, the weave layer 94 may include metal fibers that are woven together. The weave layer 94 may include a first set of fibers 95 oriented along a first fiber direction and a second set of fibers 96 oriented along a second fiber direction, and the second fiber direction forms a fiber angle Θ relative to the first fiber direction. The fiber angle Θ may be selected to optimize containment. Optionally, the containment layer may further include additional weave layers, such as a second weave layer 97 of woven metal fibers. In operation, the metal fibers will stretch in response to redial impacts by blades or blade fragments, thereby to dissipate energy and improve containment.

### Industrial Applicability

In operation, the containment ring 66 helps improve containment of liberated blades and blade fragments within the core assembly 23. The combination of the containment gap 74 between the core case 60 and the containment ring 66 and a containment layer disposed in the gap helps dissipate the energy generated by a blade or blade fragment impacting the core assembly 23. The containment layer embodiments will deform, deflect, and/or redirect the impact energy acting in a radial direction, thereby to improve containment. Additionally or alternatively, the containment layer may change the rate of energy exchange between the core case 60 and the containment ring 66, so that the interplay between these layers may increase the amount of energy dissipation when compared to conventional, monolithic structures that may occupy the same volume and space as the multilayer assemblies disclosed herein.

## Claims

1. A gas turbine engine core assembly (23) comprising: a compressor section (24);
a turbine section (28);
a combustor section (26) disposed between the compressor section and the turbine section;
a core case (60) surrounding the compressor section (24), the turbine section (28), and the combustor section (26), and defining a core case first surface (62;64);
a blade containment ring (66; 76) surrounding at least one of the compressor section and the turbine section and defining a containment ring first surface (70; 78) spaced from and oriented towards the core case first surface (62; 64) to define a containment gap (74; 74') therebetween; and
a containment layer (84; 86; 88; 90; 92; 94; 96; 100; 110) disposed in the containment gap (74; 74') and configured to dissipate energy from radially projecting impacts, **characterised in that** the containment layer is one of a plating layer (84) disposed on the containment ring first surface (70) or on the core case first surface (62, 64), a temperature-responsive shape memory layer (86) having a retracted state at a relatively low temperature and an expanded state at a relatively high temperature and a weave layer (94) having woven metal fibers.

2. The gas turbine engine core assembly (23) of claim 1, in which the core case first surface comprises a core case inner surface (64) and the containment ring first surface comprises a containment ring outer surface (70), so that the containment ring (66) is disposed nearer to the core longitudinal axis (A) than the core case (60).

3. The gas turbine engine core assembly (23) of claim 1, in which the core case first surface comprises a core case outer surface (62) and the containment ring first surface comprises a containment ring inner surface (78), so that the containment ring (76) is disposed farther from the core longitudinal axis (A) than the core case (60).

4. The gas turbine engine core assembly (23) of claim 1, 2 or 3, in which the containment ring (66; 76) is directly coupled to the core case (60).

5. The gas turbine engine core assembly (23) of any preceding claim, in which the plating layer (84) is disposed on the containment ring first surface (70).

6. The gas turbine engine core assembly (23) of claim 5, in which the plating layer (84) is formed of a malleable metal or malleable metal alloy, and optionally in which the plating layer (84) is formed of copper.

7. The gas turbine engine core assembly (23) of claim 5 or 6, in which the plating layer (84) is formed on the containment ring first surface (70; 78) by plating, coating, or transient liquid phase bonding.

8. The gas turbine engine core assembly (23) of claim 1, in which the containment layer further comprises a second weave layer (94) of woven metal fibers, or in which the weave layer (94) comprises a first set of fibers oriented along a first fiber direction and a second set of fibers oriented along a second fiber direction, and in which the second fiber direction forms a fiber angle 0 relative to the first fiber direction.

9. A gas turbine engine (20) disposed along a longitudinal engine axis (A), the gas turbine engine comprising:
a fan assembly (22);
a gas turbine engine core assembly (23) coupled to the fan assembly (22), the gas turbine engine core assembly (23) having the features of any of the preceding claims.

## Patentansprüche

1. Gasturbinentriebwerk (23), umfassend: einen Verdichterabschnitt (24);
einen Turbinenabschnitt (28);
einen Brennkammerabschnitt (26), der zwischen dem Verdichterabschnitt und dem Turbinenabschnitt angeordnet ist; ein Kerngehäuse (60), das den Verdichterabschnitt (24), den Turbinenabschnitt (28) und den Brennkammerabschnitt (26) umgibt und eine erste Kerngehäusefläche (62; 64) definiert;
ein Schaufelberstschutzring (66; 76), der mindestens einen von dem Verdichterabschnitt und dem Turbinenabschnitt umgibt und eine erste Berstschutzringfläche (70; 78) definiert, die von der ersten Kerngehäusefläche (62; 64) beabstandet und auf diese ausgerichtet ist, um einen Berstschutzspalt (74; 74') dazwischen zu definieren; und
eine Berstschutzschicht (84; 86; 88; 90; 92; 94; 96; 100; 110), die in dem Berstschutzspalt (74; 74') angeordnet und dazu konfiguriert ist, Energie von radial vorspringenden Stößen zu zerstreuen, **dadurch gekennzeichnet, dass** die Berstschutzschicht eine der Folgenden ist: eine Überzugsschicht (84), die auf der ersten Berstschutzringfläche (70) oder auf der ersten Kerngehäusefläche (62, 64) angeordnet ist, eine temperaturempfindliche Formgedächtnisschicht (86), die einen eingefahrenen Zustand bei einer verhältnismäßig geringen Temperatur und einen ausgefahrenen Zustand bei einer verhältnismäßig hohen Temperatur aufweist, und eine Gewebeschicht (94), die gewebte Metallfasern aufweist.

2. Gasturbinentriebwerkskernbaugruppe (23) nach Anspruch 1, wobei die erste Kerngehäusefläche eine Kerngehäuseinnenfläche (64) umfasst und die erste Berstschutzringfläche eine Berstschutzringaußenfläche (70) umfasst, sodass der Berstschutzring (66) näher zur Kernlängsachse (A) als das Kerngehäuse (60) angeordnet ist.

3. Gasturbinentriebwerkskernbaugruppe (23) nach Anspruch 1, wobei die erste Kerngehäusefläche eine Kerngehäuseaußenfläche (62) umfasst und die erste Berstschutzringfläche eine Berstschutzringinnenfläche (78) umfasst, sodass der Berstschutzring (76) entfernter von der Kernlängsachse (A) als das Kerngehäuse (60) angeordnet ist.

4. Gasturbinentriebwerkskernbaugruppe (23) nach Anspruch 1, 2 oder 3, wobei der Berstschutzring (66, 76) direkt an das Kerngehäuse (60) gekoppelt ist.

5. Gasturbinentriebwerkskernbaugruppe (23) nach einem der vorhergehenden Ansprüche, wobei die Überzugsschicht (84) an der ersten Berstschutzringfläche (70) angeordnet ist.

6. Gasturbinentriebwerkskernbaugruppe (23) nach Anspruch 5, wobei die Überzugsschicht (84) aus einem formbaren Metall oder einer formbaren Metalllegierung besteht und wobei optional die Überzugsschicht (84) aus Kupfer besteht.

7. Gasturbinentriebwerkskernbaugruppe (23) nach Anspruch 5 oder 6, wobei die Überzugsschicht (84) an der ersten Berstschutzringfläche (70, 78) durch ein Überziehen, Beschichten oder vorübergehendes Binden der Flüssigphase gebildet ist.

8. Gasturbinentriebwerkskernbaugruppe (23) nach Anspruch 1, wobei die Berstschutzschicht ferner eine zweite Gewebeschicht (94) aus gewebten Metallfasern umfasst oder wobei die Gewebeschicht (94) einen ersten Satz von Fasern, die entlang einer ersten Faserrichtung ausgerichtet sind, und einen zweiten Satz von Fasern umfasst, die entlang einer zweiten Faserrichtung ausgerichtet sind, und wobei die zweite Faserrichtung einen Faserwinkel 0 in Bezug auf die erste Faserrichtung bildet.

9. Gasturbinentriebwerk (20), das entlang einer Motorlängsachse (A) angeordnet ist, das Gasturbinentriebwerk umfassend:
eine Gebläsebaugruppe (22);
eine Gasturbinentriebwerkskernbaugruppe (23), die an die Gebläsebaugruppe (22) gekoppelt ist, wobei die Gasturbinentriebwerkskernbaugruppe (23) die Merkmale nach einem der vorhergehenden Ansprüche aufweist.

## Revendications

1. Ensemble de noyau de moteur à turbine à gaz (23) comprenant : une section de compresseur (24) ;
une section de turbine (28) ;
une section de chambre de combustion (26) disposée entre la section de compresseur et la section de turbine ;
un carter de noyau (60) entourant la section de compresseur (24), la section de turbine (28) et la section de chambre de combustion (26), et définissant une première surface de carter de noyau (62 ; 64) ;
une bague de retenue d'aube (66 ; 76) entourant au moins l'une de la section de compresseur et de la section de turbine et définissant une première surface de bague de retenue (70 ; 78) espacée de la première surface de carter de noyau (62 ; 64) et orientée vers celle-ci pour définir un espace de retenue (74 ; 74') entre elles ; et
une couche de retenue (84 ; 86 ; 88 ; 90 ; 92 ; 94 ; 96 ; 100 ; 110) disposée dans l'espace de retenue (74 ; 74') et configurée pour dissiper l'énergie des impacts faisant saillie radialement, **caractérisé en ce que** la couche de retenue est l'une d'une couche de placage (84) disposée sur la première surface de bague de retenue (70) ou sur la première surface de carter de noyau (62, 64), une couche à mémoire de forme sensible à la température (86) ayant un état rétracté à une température relativement basse et un état dilaté à une température relativement élevée et une couche d'armure (94) ayant des fibres métalliques tissées.

2. Ensemble de noyau de moteur à turbine à gaz (23) selon la revendication 1, dans lequel la première surface de carter de noyau comprend une surface interne de carter de noyau (64) et la première surface de bague de retenue comprend une surface externe de bague de retenue (70), de sorte que la bague de retenue (66) est disposée plus près de l'axe longitudinal de noyau (A) que le carter de noyau (60).

3. Ensemble de noyau de moteur à turbine à gaz (23) selon la revendication 1, dans lequel la première surface de carter de noyau comprend une surface externe de carter de noyau (62) et la première surface de bague de retenue comprend une surface interne de bague de retenue (78), de sorte que la bague de retenue (76) est disposée plus loin de l'axe longitudinal de noyau (A) que le carter de noyau (60).

4. Ensemble de noyau de moteur à turbine à gaz (23) selon la revendication 1, 2 ou 3, dans lequel la bague de retenue (66 ; 76) est directement couplée au carter de noyau (60).

5. Ensemble de noyau de moteur à turbine à gaz (23) selon une quelconque revendication précédente, dans lequel la couche de placage (84) est disposée sur la première surface de bague de retenue (70).

6. Ensemble de noyau de moteur à turbine à gaz (23) selon la revendication 5, dans lequel la couche de placage (84) est formée d'un métal malléable ou d'un alliage métallique malléable, et éventuellement dans lequel la couche de placage (84) est formée de cuivre.

7. Ensemble de noyau de moteur à turbine à gaz (23) selon la revendication 5 ou 6, dans lequel la couche de placage (84) est formée sur la première surface de bague de retenue (70 ; 78) par placage, revêtement ou liaison en phase liquide transitoire.

8. Ensemble de noyau de moteur à turbine à gaz (23) selon la revendication 1, dans lequel la couche de retenue comprend en outre une seconde couche d'armure (94) de fibres métalliques tissées, ou dans lequel la couche d'armure (94) comprend un premier ensemble de fibres orientées le long d'une première direction de fibre et un second ensemble de fibres orientées le long d'une seconde direction de fibre, et dans lesquels la seconde direction de fibre forme un angle de fibre 0 par rapport à la première direction de fibre.

9. Moteur à turbine à gaz (20) disposé le long d'un axe de moteur longitudinal (A), le moteur à turbine à gaz comprenant :
un ensemble soufflante (22) ;
un ensemble de noyau de moteur à turbine à gaz (23) couplé à l'ensemble soufflante (22), l'ensemble de noyau de moteur à turbine à gaz (23) ayant les caractéristiques selon l'une quelconque des revendications précédentes.
